Europäisches Patentamt

European Patent Office

Office européen des brevets

Veröffentlichungsnummer: **0 292 703**

**A2**

# EUROPÄISCHE PATENTANMELDUNG

Anmeldenummer: 88106458.8

Int. Cl.⁴ **F16L 1/02**

Anmeldetag: 22.04.88

Priorität: 28.04.87 CH 1605/87

Veröffentlichungstag der Anmeldung:
30.11.88 Patentblatt 88/48

Benannte Vertragsstaaten:
AT BE CH DE ES FR GB GR IT LI NL SE

Anmelder: **AMETEX AG**
**Eternitstrasse 3**
**CH-8867 Niederurnen(CH)**

Erfinder: **Keldany, Rachid**
**Im Aeglisten 3**
**CH-8124 Maur(CH)**
Erfinder: **Shaw, Keith James**
**Rainstrasse 50**
**CH-8808 Pfäffikon(CH)**

Vertreter: **Scheidegger, Zwicky, Werner & Co.**
**Stampfenbachstrasse 48 Postfach**
**CH-8023 Zürich(CH)**

Verfahren und Vorrichtung zum Verlegen von Kunststoffrohren.

Bei diesem Rohrverlegeverfahren wird auf den Mantel eines Kunststoffrohres (4) mit vorbestimmter Steifigkeit vor dem Einbringen in eine Ausnehmung, z.B. in eine Rohrleitung, ein Versteifungsmaterial (7) in Form von aushärtbarem Kunstharz aufgebracht. Dieses Material härtet erst nach Ablauf einer gewissen Zeit, d.h. nachdem das Rohr (4) in seine gewünschte Stellung gebracht wurde, vollständig aus und erhöht dann die Eigensteifigkeit des Kunststoffrohres.

Die Vorrichtung weist Mittel (5,6,7) auf, um ein Versteifungsmaterial auf die Rohroberfläche zu bringen.

Fig. 2

## Verfahren und Vorrichtung zum Verlegen von Kunststoffrohren

Die vorliegende Erfindung betrifft ein Verfahren zum Verlegen von Kunststoffrohren in bestehende Ausnehmungen und Durchgänge, insbesondere in vorgegrabene unterirdische rohrförmige Durchgänge oder in bereits bestehende, beispielsweise auszubessernde Rohrleitungen, sowie eine Vorrichtung zu dessen Durchführung.

Eine heute immer bekannter werdende Technik, Ausnehmungen, insbesondere Durchgänge im Boden, mit einem Kunststoffrohr auszukleiden oder auch bestehende Rohrleitungen der verschiedensten Durchmesser dadurch zu sanieren, dass Kunststoffrohre eingezogen werden, besteht beispielsweise darin, dass solche Kunststoffrohre in irgend einer Weise in die Ausnehmungen eingeschoben oder eingezogen werden. Bei einem besonders vorteilhaften Vorgehen wird auch das einzubringende Kunststoffrohr am Ort hergestellt, d.h. aus einem Kunststoff-Bandmaterial gewickelt. Die dazu erforderliche Wickelmaschine wird oft in einem Schacht auf die Höhe des Durchganges gebracht und das Kunststoffrohr in der Wickeltrommel gewickelt und dabei gleichzeitig in den Durchgang getrieben.

Unabhängig von der Technik der Herstellung des Kunststoffrohres und dessen Einbringen in die Ausnehmungen sollte das Rohr nicht allzu steif sein, wenn es beispielsweise in einen nicht geradlinig verlaufenden Durchgang eingeführt werden soll. Ein Einführen oder Einschieben von Rohren in gekrümmte Durchgänge ist praktisch kaum durchführbar, es sei denn, dass diese aus relativ flexiblem Material bestehen und eingezogen werden. Solche Rohre haben aber oft den Nachteil, dass sie, einmal in der vorgesehenen Stellung, eine für die auftretenden Belastungen völlig ungenügende Steifigkeit aufweisen.

Es wurde versucht, diesem Nachteil durch komplizierte Mechanismen (Feder-Spannmechanismen) abzuhelfen. Der Erfolg war im vergleich zu den Kosten minim.

Aufgabe der vorliegenden Erfindung ist es, ein Verfahren zu schaffen, welches einerseits das Einführen von Kunststoffrohren mit relativ geringer Steifigkeit erlaubt, andererseits eine nachträgliche Erhöhung der Steifigkeit des Rohres auf den im Betrieb gewünschten Wert erlaubt.

Das Verfahren zum Verlegen von Kunststoffrohren zeichnet sich erfindungsgemäss dadurch aus, dass auf den Mantel eines Kunststoffrohres mit vorbestimmter Steifigkeit ein aushärtbares Versteifungsmaterial aufgebracht und das derart vorbereitete Rohr anschliessend, jedoch vor dem Aushärten des Versteifungsmaterials in die vorgesehene Stellung in die Ausnehmung eingebracht wird, so dass durch das Aushärten des Versteifungsmaterials dem Rohr in seiner verlegten Stellung gegenüber dessen ursprünglicher Eigensteifigkeit erhöhte Steifigkeit verliehen wird.

Dank diesem Verfahren kann das Rohr mit jeder gewünschten Flexibilität in die Ausnehmung eingeführt werden. Die Steifigkeit erhöht sich erst nach einer bestimmten Zeit, während der sich das vorher aufgebrachte Versteifungsmaterial erhärtet hat.

Das Versteifungsmaterial wird vorzugsweise auf die Mantelaussenfläche des Rohres aufgebracht. Als Material eignet sich gegebenenfalls mit Verstärkungseinlagen (welche gleichzeitig als Träger dienen können) versehene aushärtbare Kunstharze, wie beispielsweise Epoxidharze, welche durch Zugabe eines Härtungskatalysators innert vorbestimmter Zeit aushärten. Es kann auch ein Versteifungsmaterial gewählt werden, welches erst unter dem Einfluss zugeführter Wärme oder elektromagnetischer Wellen (Licht) zu polymerisieren beginnt.

Das Versteifungsmaterial, d.h. das Harz, kann vorerst auf einem Träger, z.B. ein Band aus flexiblem Material, Glasfasern und dergleichen aufgetragen werden, um dann als Ganzes auf den zu versteifenden Rohrmantel aufgewickelt zu werden. Das Versteifungsmaterial kann sich mit dem Rohrmaterial verbinden.

Dabei wird das mit Versteifungsmaterial vorimprägnierte Trägermaterial nach dem Aufwickeln vorzugsweise mit einem Härtungskatalysator benetzt.

Die eingesetzten Kunststoffrohre können mit vorzugsweise umlaufenden Aussenrippen versehen sein. Das Versteifungsmaterial wird dann in den Rippenzwischenräumen aufgebracht.

Das Versteifungsmaterial kann selbstverständlich während des Einbringens des Rohres in die Ausnehmung aufgebracht werden (auf die sich noch ausserhalb der Ausnehmung befindlichen Rohrabschnitte). Dies wird insbesondere dort praktiziert, wo das Kunststoffrohr im Wickelverfahren am Ort, d.h. direkt vor der Verlegestelle hergestellt wird.

Bei einer besonderen Ausführungsform wird zur Bildung des zu verlegenden Kunststoffrohres ein lichtdurchlässiges Material verwendet. Damit kann als Versteifungsmaterial ein lichthärtendes Material eingesetzt werden, welches nach dem Verlegen des Rohres mittels einer durch das Rohr geführten Lichtquelle, z.B. einer UV-Lichtquelle zum Aushärten gebracht wird.

Das eingesetzte Versteifungsmaterial soll sich vorzugsweise weder mit Wasser vermischen noch von Wasser verdrängt werden können.

Ebenfalls Gegenstand der Erfindung bildet eine Vorrichtung mit Mitteln, um ein aushärtbares Versteifungsmaterial auf den Mantel eines vorgefertigten Kunststoffrohres aufzubringen.

Eine besonders geeignete Vorrichtung weist einen Vorratsbehälter bzw. Behälter mit flüssigem bzw. plastischem aushärtbarem Material auf, ferner Mittel, um wenigstens ein Trägerband für das aushärtbare Material durch den Behälter zu führen, um mit aushärtbarem Material getränkt zu werden, sowie Mittel, um das mit aushärtbarem Material getränkte Bandmaterial auf die Manteloberfläche des Kunststoffrohres aufzuwickeln.

Die Erfindung wird nachstehend noch etwas näher erläutert. In der Zeichnung ist ein Ausführungsbeispiel einer erfindungsgemässen Vorrichtung dargestellt. Es zeigt:

Fig. 1 einen Vertikalschnitt, rein schematisch, durch eine Rohrwickeleinrichtung mit zugeordneter Vorrichtung zum Aufbringen von aushärtbarem Versteifungsmaterial auf die Rohraussenwand, und

Fig. 2 eine Draufsicht, ebenfalls rein - schematisch, auf die Einrichtung nach Fig. 1.

Wie vorstehend bereits beschrieben, soll mit dem erfindungsgemässen Verfahren ein Kunststoffrohr verlegt werden und dabei Massnahmen getroffen werden, damit die Eigensteifigkeit des Rohres nach dem Verlegen, d.h. erst wenn sich das Rohr in der gewünschten Endstellung befindet, erhöht wird.

Dies wird dadurch erreicht, dass praktisch unmittelbar vor dem Einschieben oder Einziehen des Rohres in die damit zu verkleidende Ausnehmung (bestehende auszubessernde Rohrleitung, unterirdischer Kanal etc.) auf die Rohrwandoberfläche, üblicherweise auf die Rohraussenwand, ein nach vorbestimmter Zeit aushärtendes Versteifungsmaterial aufgebracht wird.

Dieses Material kann als eigentlicher Belag oder in Bahnen aufgebracht werden. Vorzugsweise erfolgt dies so, dass ein bandförmiges Trägermaterial (textile Bänder, Glasfaserstrang oder dergleichen) mit einem aushärtbaren Kunstharz beschichtet oder getränkt wird, und dieses Bandmaterial anschliessend auf die Rohrwand gewickelt wird (vorzugsweise in die Zwischenräume von umlaufenden Rohraussenrippen). Das Kunstharz verbindet sich dann mit dem Rohrmaterial und härtet aus, wobei die Aushärtungszeit vom ausgewählten Versteifungsmaterial bzw. dem zugegebenen Härtungskatalysator abhängt (Art des Katalysators, zugegebene Menge).

Als Versteifungsmaterialien eignen sich besonders Epoxidharze (Aethoxylenharze, Epoxyharze, wie z.B. Araldite). Diese Harze bilden nach Vernetzung mit Katalysatoren (z.B. Aminkatalysatoren) einen spannungsfreien Körper hoher Härte und Schlagzähigkeit und versteifen das Rohr in gewünschter Weise.

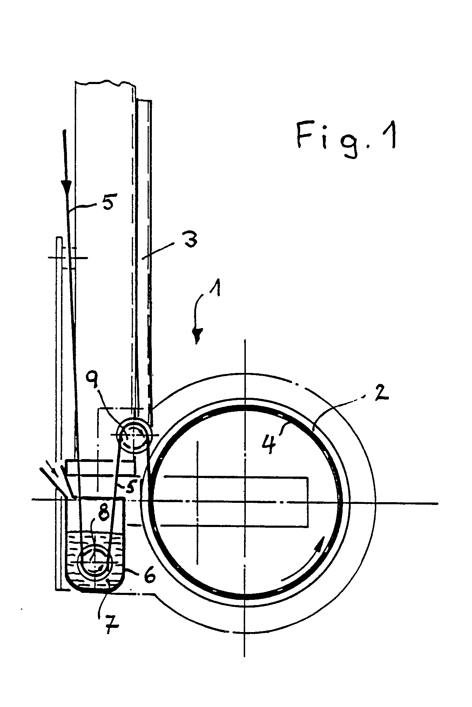

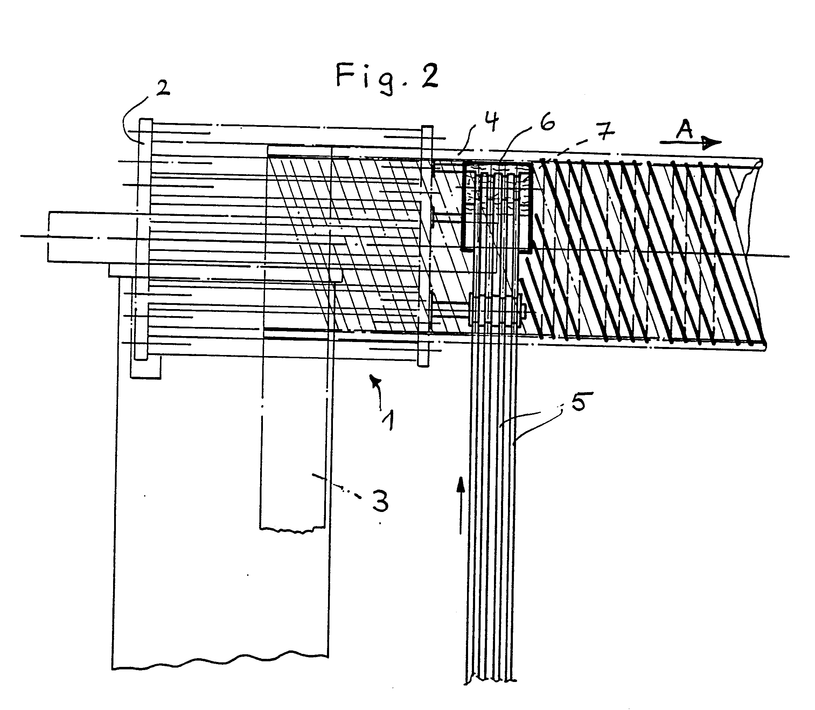

Die Zeichnung (Fig. 1 und 2) zeigt eine Rohrwickeleinrichtung 1, bei welcher auf der Innenwand einer Wickeltrommel 2 ein Kunststoffband 3 (gegebenenfalls mit Aussenrippen versehen) - schraubenlinienförmig zu einem Rohr 4 gewickelt wird (indem die Bandlängskanten miteinander verbunden werden, sei dies durch mechanische Verbindung, wie Nut und Kamm, und/oder durch Verkleben oder Verschweissen). Das gebildete Rohr 4 wird durch den Maschinenantrieb aus der Trommel 2 geschoben und üblicherweise direkt in die zu verkleidende Rohrleitung (nicht dargestellt) in Richtung des Pfeiles A vorgetrieben.

Unmittelbar nach dem Austritt aus der Trommel 2 werden mit einem aushärtbaren Versteifungsmaterial beschichtete bzw. getränkte Bänder 5 auf die Rohraussenwand gewickelt (vorzugsweise in die Zwischenräume von umlaufenden Rohrrippen). Die Bänder 5 werden dazu durch einen Behälter 6 mit flüssigem Versteifungsmaterial 7 geführt, dort mit diesem Material beschichtet oder getränkt und über Rollen 8,9 auf den Rohrmantel geführt und auf diesen angelegt. Beim gezeigten Beispiel werden gleichzeitig vier Trägerbänder 5 verwendet. Durch das sich in Pfeilrichtung um seine Längsachse drehende Rohr 4 werden die Trägerbänder selbsttätig abgezogen und an die Rohroberfläche angelegt. Das so mit Versteifungsmaterial versehene Rohr wird dann in die vorgesehene Stellung gebracht, wo das Versteifungsmaterial aushärtet und die Eigensteifigkeit des ursprünglichen Rohres erhöht.

Grundsätzlich wäre es auch denkbar, das Versteifungsmaterial auf die Rohrwand aufzusprühen, wo es dann in Form eines aushärtbaren Belages haftet bzw. sich mit dem Material des Rohres verbindet und aushärtet.

Wie bereits erwähnt, kann zur Bildung des Rohres ein lichtdurchlässiges Material verwendet werden. Dies ermöglicht den Einsatz von lichthärtendem Versteifungsmaterial, wobei die Aushärtung mittels einer durch das verlegte Rohr geführten Lichtquelle erfolgen kann.

## Ansprüche

1. Verfahren zum Verlegen von Kunststoffrohren in bestehende Ausnehmungen, insbesondere in vorgegrabene unterirdische rohrförmige Durchgänge oder in bereits bestehende Rohrleitungen, dadurch gekennzeichnet, dass auf den Mantel eines Kunststoffrohres mit vorbestimmter Steifigkeit ein aushärtbares Versteifungsmaterial aufgebracht und das derart vorbereitete Rohr anschliessend, jedoch vor dem Aushärten des Versteifungsmaterials, in die vorgesehene Stellung in die Ausnehmung eingebracht wird, so dass durch das Aushärten des Versteifungsmaterials dem Rohr in seiner verlegten Stellung gegenüber dessen ursprünglicher Eigensteifigkeit erhöhte Steifigkeit verliehen wird.

2. Verfahren nach Anspruch 1, dadurch gekennzeichnet, dass das Versteifungsmaterial auf die Mantelaussenfläche des Rohres aufgebracht wird.

3. Verfahren nach einem der Ansprüche 1 oder 2, dadurch gekennzeichnet, dass als aushärtbares Versteifungsmaterial ein gegebenenfalls mit Verstärkungseinlagen versehenes polymerisierbares Kunststoffmaterial, z.B. ein Epoxidharz, Polyesterharz oder mit Polymethylmethacrylat modifiziertes Polyesterharz verwendet wird.

4. Verfahren nach Anspruch 3, dadurch gekennzeichnet, dass die Polymerisierung des Versteifungsmaterials erst eingeleitet wird, nachdem das mit dem Versteifungsmaterial versehene Rohr in die vorgesehene Stellung in die Ausnehmung eingebracht wurde, beispielsweise durch Zufuhr von Wärme, mittels elektromagnetischer Wellen, wie z.B. Licht, oder Strahlenenergie, mit oder ohne Verwendung von Katalysatoren.

5. Verfahren nach einem der Ansprüche 1-4, dadurch gekennzeichnet, dass das aushärtbare Versteifungsmaterial vorerst auf ein Trägermaterial, z.B. auf textile Fäden oder Bänder, Glasfasern und dergleichen aufgetragen und das Ganze auf den Rohrmantel aufgewickelt wird.

6. Verfahren nach den Ansprüchen 1-5, dadurch gekennzeichnet, dass ein Rohr mit Aussenrippen, insbesondere mit umlaufenden Rippen verwendet wird und dass das Versteifungsmaterial in den Rippenzwischenräumen aufgebracht wird.

7. Verfahren nach Anspruch 5, dadurch gekennzeichnet, dass das mit aushärtbarem Versteifungsmaterial versehene Trägermaterial in schraubenlinienförmigen Bahnen auf die Rohrwand aufgebracht wird.

8. Verfahren nach einem der Ansprüche 1-7, dadurch gekennzeichnet, dass das aushärtbare Versteifungsmaterial während des Einbringens des Rohres in die Ausnehmung auf die sich noch ausserhalb der Ausnehmung befindliche Rohrwand laufend aufgebracht wird.

9. Verfahren nach einem der Ansprüche 1-8, dadurch gekennzeichnet, dass das Kunststoffrohr am Ort, d.h. direkt vor der Verlegestelle im Wickelverfahren hergestellt und gleichzeitig in die Ausnehmung vorgetrieben wird und dass das aushärtbare Versteifungsmaterial am Austritt aus der Wickelmaschine auf das gewickelte Rohr aufgebracht wird.

10. Verfahren nach einem der Ansprüche 1-9, dadurch gekennzeichnet, dass als Material zur Bildung des Kunststoffrohres ein lichtdurchlässiges Kunststoffmaterial und als Versteifungsmaterial ein unter Lichteinwirkung aushärtbares Material verwendet wird, wobei letzteres nach dem Verlegen des Rohres in die vorgesehene Endstellung mittels Licht, z.B. UV-Licht, zum Aushärten gebracht wird, wozu die Lichtquelle durch das verlegte Rohr geführt wird.

11. Verfahren nach Anspruch 5, dadurch gekennzeichnet, dass das Trägermaterial mit Versteifungsmaterial vorimprägniert und nach dem Aufwickeln auf das Rohr mit einem Härtungskatalysator benetzt wird.

12. Verfahren nach einem der Ansprüche 1-11, dadurch gekennzeichnet, dass als aushärtbares Versteifungsmaterial ein Material verwendet wird, welches sich weder mit Wasser vermischt noch von Wasser verdrängt wird.

13. Vorrichtung zur Durchführung des Verfahrens nach einem der Ansprüche 1-12, gekennzeichnet durch Mittel, um ein aushärtbares Versteifungsmaterial auf den Mantel eines vorgefertigten Kunststoffrohres aufzubringen.

14. Vorrichtung nach Anspruch 13, dadurch gekennzeichnet, dass sie einen Vorratsbehälter mit flüssigem bzw. plastischem aushärtbarem Material aufweist, ferner Mittel, um wenigstens ein Trägerband für das aushärtbare Material durch den Behälter zu führen, um das mit aushärtbarem Material getränkte Bandmaterial auf die Manteloberfläche des Kunststoffrohres aufzuwickeln.

15. Vorrichtung nach Anspruch 14, dadurch gekennzeichnet, dass Mittel vorgesehen sind, um gleichzeitig mehrere Trägerbänder mit aushärtbarem Versteifungsmaterial zu versehen und die Bänder vorzugsweise parallel zueinander verlaufend auf den Rohrmantel aufzuwickeln.

Fig.1

# Fig. 2